(19) Europäisches Patentamt
European Patent Office
Office européen des brevets

(11) **EP 2 763 340 B1**

## (12) FASCICULE DE BREVET EUROPEEN

(45) Date de publication et mention
de la délivrance du brevet:
**07.10.2015 Bulletin 2015/41**

(51) Int Cl.:
**H04J 11/00** *(2006.01)*   **H04W 16/14** *(2009.01)*
**H04L 1/00** *(2006.01)*

(21) Numéro de dépôt: **14153658.1**

(22) Date de dépôt: **03.02.2014**

(54) **Méthode d'adaptation de liaison dirigée par un choix de régime d'interférence**

Linkadaptationsverfahren, das durch ein ausgewähltes Interferenzmodus gesteuert wird

Method for link adaptation directed by choice of interference mode

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.02.2013 FR 1350944**

(43) Date de publication de la demande:
**06.08.2014 Bulletin 2014/32**

(73) Titulaire: **Commissariat à l'Énergie Atomique
et aux Énergies Alternatives
75015 Paris (FR)**

(72) Inventeurs:
• **Calvanese Strinati, Emilio
38000 Grenoble (FR)**
• **Abgrall, Cédric
74500 Evian les Bains (FR)**

(74) Mandataire: **Augarde, Eric et al
Brevalex
56 Boulevard de l'Embouchure,
Bât. B
B.P. 27519
31075 Toulouse Cedex 2 (FR)**

(56) Documents cités:
**EP-A1- 2 413 511     EP-A1- 2 549 670**

• **CEÌ DRIC ABGRALL ET AL: "Centralized Power
Allocation for Interference Limited Networks",
VEHICULAR TECHNOLOGY CONFERENCE FALL
(VTC 2010-FALL), 2010 IEEE 72ND, IEEE,
PISCATAWAY, NJ, USA, 6 septembre 2010
(2010-09-06), pages 1-5, XP031770550, ISBN:
978-1-4244-3573-9**

**Description**

**DOMAINE TECHNIQUE**

La présente invention concerne de manière générale le domaine des systèmes de télécommunication sans fil et plus particulièrement une méthode d'adaptation de liaison dans un tel système. Elle trouve notamment à s'appliquer dans les systèmes de télécommunication hétérogènes.

**ÉTAT DE LA TECHNIQUE ANTÉRIEURE**

Un des problèmes affectant une communication au sein d'un système de télécommunication cellulaire est celui de l'interférence générée par les autres communications de la cellule ou des cellules voisines. On distingue classiquement l'interférence inter-cellulaire due aux communications des cellules voisines et l'interférence intra-cellulaire due aux communications de la même cellule où se trouve le terminal.

De nombreuses techniques ont été proposées et mises en oeuvre pour éviter ou réduire l'interférence intra-cellulaire. La plupart de ces techniques reposent sur une allocation de ressources de transmission orthogonales, par exemple d'intervalles de temps de transmission (TDMA), de fréquences de transmission (FDMA), d'intervalles de sous-porteuses d'un multiplex OFDM (OFDMA), de codes de transmission (CDMA), de faisceaux de transmission (SDMA), voire d'une combinaison de telles ressources, de manière à séparer les différentes communications d'une même cellule.

Les ressources de transmission étant rares, celles-ci sont généralement réutilisées, au moins partiellement, d'une cellule à l'autre. Un module de gestion des ressources de transmission ou RRM (*Radio Resource Management*) est alors en charge d'allouer de manière statique ou dynamique les ressources de transmission aux différentes cellules. Il est notamment connu de réutiliser de manière des fréquences de transmission selon un schéma bi-dimensionnel prédéterminé (*Frequency Reuse Pattern*).

Cette gestion des ressources de transmission est toutefois peu efficace dans les réseaux à forte densité, les réseaux hétérogènes ou les réseaux M2M (machine à machine). Par réseau hétérogène, on entend la superposition d'un premier réseau cellulaire à faible granularité spatiale avec au moins un second réseau cellulaire de forte granularité spatiale (constitué de femto-cellules ou de pico-cellules). Le premier réseau cellulaire est alors dénommé macro-cellulaire par opposition au second réseau.

L'allocation de ressources orthogonales dans les réseaux précités aboutirait en effet à une exploitation insuffisante de ces ressources et à une faible efficacité spectrale. Il en résulte que les communications relatives à des utilisateurs appartenant à des cellules voisines, ou à des cellules de niveaux hiérarchiques différents dans un réseau hétérogène, subissent généralement une interférence intra-bande (*in band interference*).

Pour une communication donnée, dite ici première communication, on appelle communément interférence intra-bande l'interférence induite par une seconde communication utilisant la même ressource de transmission que la première. Par opposition, on appelle interférence inter-bande celle induite par une seconde communication utilisant une ressource de transmission distincte (par exemple une fréquence de transmission voisine ou un autre intervalle de transmission) de celle utilisée par la première.

Un réseau dans lequel l'interférence intra-bande est prédominante par rapport au bruit thermique est dit « limité par l'interférence » (*interference limited network)* dans la mesure où les capacités des différentes liaisons du réseau sont davantage contraintes par l'interférence que par le bruit lui-même.

Le traitement et la réduction de l'interférence intra-bande ont fait l'objet de nombreuses recherches.

La méthode de traitement la plus simple est de considérer l'interférence comme un simple bruit thermique. Cette méthode de traitement n'est toutefois acceptable que si le niveau d'interférence est faible. Il est à noter que la plupart des algorithmes d'allocation de puissance (*power allocation*) sont basés sur cette hypothèse.

D'autres méthodes de traitement permettent de réduire l'interférence en décodant le signal d'information de la(ou les) communication(s) interférente(s). Cela suppose que le terminal récepteur considéré connaisse les codes ayant servi à les coder. Parmi ces méthodes, on connaît notamment les schémas de réduction d'interférence de type parallèle ou PIC (*Parallel Interference Canceller*) ou série (*Successive Interference Canceller*), bien connus de l'homme du métier.

Une autre approche classique pour réduire le niveau d'interférence est de mettre en oeuvre une méthode adaptative d'allocation de puissance (*adaptive power control*)*.* Une telle méthode permet de contrôler les niveaux de puissance des différents terminaux émetteurs de manière à garantir une qualité de service prédéterminée aux différents utilisateurs. Cette qualité de service peut être mesurée selon le cas en termes de débit, de temps de latence, de taux d'erreur paquet, de couverture spatiale, etc. On appelle conventionnellement métrique de qualité de service, le ou les paramètre(s) utilisé(s) pour la mesurer. En règle générale, une communication d'un utilisateur requiert une qualité de service minimale qui est prise en compte ou négociée lors de la procédure d'admission de l'utilisateur dans la cellule. Cette qualité de service minimale s'exprime sous la forme d'une contrainte sur la métrique de qualité de service : latence inférieure à un seuil, débit supérieur à un minimum garanti, etc.. L'allocation de puissance est alors effectuée de manière à respecter la contrainte sur la métrique de qualité de service.

Les méthodes d'allocation de puissance font généralement l'hypothèse que l'interférence est assimilable à du bruit thermique. Toutefois cette hypothèse est bien souvent pessimiste de sorte que les puissances d'émission allouées peuvent être sensiblement supérieures à celles qui seraient nécessaires pour obtenir la qualité de service souhaitée. Cette allocation conduit par conséquent à une consommation d'énergie inutile et, pour les communications montantes, à une réduction de l'autonomie des terminaux.

Il a été récemment proposé dans les demandes FR-A-2 963 194 et FR-A-2 963 195 une méthode d'allocation de puissance, centralisée ou distribuée, sous contrainte de qualité de service. Plus précisément, pour une contrainte de qualité de service donnée, cette méthode d'allocation de puissance permet de réduire les puissances d'émission des terminaux en tenant compte de certains régimes d'interférence affectant les différentes communications. Ainsi, selon cette méthode, si l'on considère une première communication entre un premier terminal émetteur et un premier terminal récepteur, interférée par une seconde communication entre un second terminal émetteur et un second terminal récepteur, on distingue pour la première communication trois régimes d'interférence possibles : un premier régime de fort SINR (*signal to noise and interference ratio*), dans lequel le premier récepteur traite le signal de la seconde communication comme du bruit thermique, un second régime de SINR modéré dans lequel le premier récepteur décode conjointement les signaux d'information des première et seconde communications, et enfin un troisième régime de faible SINR dans lequel le premier récepteur décode d'abord le signal d'information de la seconde communication, soustrait sa contribution au signal reçu avant de décoder le signal d'information de la seconde communication à partir du signal ainsi obtenu.

Cette méthode d'allocation de puissance fonctionne bien pour un couple de communications interférentes. Toutefois, pour un plus grand nombre de communications interférentes, la situation devient sensiblement plus complexe. On comprend en effet qu'une allocation de puissance à un émetteur donné influence le diagramme d'interférence des autres communications et peut modifier leurs régimes d'interférence respectifs. Ainsi la modification de puissance d'un émetteur peut conduire à une modification de puissance d'un ou plusieurs autre émetteurs. L'allocation de puissance peut devenir instable et diverger jusqu'à aboutir à une situation où tous les émetteurs concernés transmettent à puissance maximale.

Les documents CEÌ DRIC ABGRALL ET AL: "Centralized Power Allocation for Interference Limited Networks", VEHICULAR TECHNOLOGY CONFERENCE FALL (VTC 2010-FALL), 2010 IEEE 72ND, IEEE, PISCATAWAY, NJ, USA, 6 septembre 2010 (2010-09-06), pages 1-5, XP031770550, ISBN: 978-1-4244-3573-9 décrit des méthodes de classification selon des régimes d'interférences différents, mais sans les lier à l'utilisation de modulation et codage correspondants.

EP 2 549 670 A1 décrit le choix, par une station de base, de modulation et de codage selon un taux d'erreur bit ou paquet désiré.

Le but de la présente invention est de proposer une méthode d'optimisation de liaison dans un réseau de télécommunication sans fil, sans modification d'allocation de puissance des différents émetteurs et donc sans perturbation sensible de la situation d'interférence entre les différentes communications.

## EXPOSÉ DE L'INVENTION

La présente invention est définie par une méthode d'adaptation de liaison pour système de télécommunication sans fil comprenant au moins un premier couple de terminaux constitué d'un premier terminal émetteur et d'un premier terminal récepteur et d'un second couple de terminaux constitué d'un second terminal émetteur et d'un second terminal récepteur, une première communication sur une première liaison entre les terminaux du premier couple utilisant les mêmes ressources de transmission qu'une seconde communication sur une seconde liaison entre les terminaux du second couple, de sorte que les deux communications interfèrent entre elles. Selon cette méthode :

- on sélectionne, pour la première communication, un premier régime d'interférence parmi un régime faible, dans lequel le premier terminal récepteur traite l'interférence due à la seconde communication comme un bruit thermique, et un régime fort, dans lequel il décode le signal d'information de la seconde communication pour en soustraire sa contribution au signal reçu ;
- on détermine un schéma de modulation et de codage pour la seconde liaison permettant à la première communication d'opérer dans le régime d'interférence ainsi sélectionné ;
- on détermine un schéma de modulation et de codage pour la première liaison maximisant l'efficacité spectrale sans que cette liaison soit en situation de coupure.

Selon une première variante, le régime d'interférence est sélectionné en fonction d'un niveau de charge de la batterie du premier terminal récepteur, le régime faible étant sélectionné lorsque ce niveau est inférieur à un premier seuil et le régime fort étant sélectionné lorsque ce niveau est supérieur à un second seuil.

Selon une seconde variante, le régime d'interférence est sélectionné en fonction des ressources de calcul du premier terminal récepteur, le régime faible étant sélectionné lorsque ces ressources sont inférieures à un premier seuil et le régime fort étant sélectionné lorsque ces ressources sont supérieures à un second seuil.

Selon une troisième variante, le régime d'interférence est sélectionné en fonction de la puissance de l'interférence reçue par le premier terminal récepteur, le régime faible étant sélectionné lorsque cette puissance est inférieure à un premier seuil et le régime fort étant sélectionné lorsque cette puissance est supérieure à un second seuil.

Avantageusement, on sélectionne également un second régime d'interférence pour la seconde communication, parmi un régime faible, dans lequel le second terminal récepteur traite l'interférence due à la première communication comme un bruit thermique, et un régime fort, dans lequel il décode le signal d'information de la première communication pour en soustraire sa contribution au signal reçu ;

- on détermine un schéma de modulation et de codage pour la première liaison permettant à la première communication d'opérer dans le régime d'interférence ainsi sélectionné.

Les schémas de modulation et de codage peuvent être déterminés conjointement pour la première et la seconde liaisons, de manière à ce que la première et la seconde communications opèrent respectivement dans les régimes d'interférence sélectionnés pour la première et la seconde communications, lesdits schémas de modulation étant en outre sélectionnés pour présenter une efficacité spectrale maximale sans que les première et seconde liaisons soient en situation de coupure.

Avantageusement, on mesure la qualité de chaque liaison à l'aide d'un rapport signal sur bruit plus interférence ou bien à l'aide d'une métrique exponentielle de SINR efficace, et l'on en déduit un indice de qualité de ladite liaison.

Afin de garantir qu'une liaison n'est pas en situation de coupure, le schéma de modulation et de codage peut être choisi inférieur à l'indice de qualité de la liaison.

Selon un premier mode de réalisation, la détermination du schéma de modulation et de codage pour la première, respectivement la seconde liaison, est effectuée de manière centralisée par un noeud de contrôle, ledit noeud de contrôle notifiant le schéma ainsi déterminé au premier, respectivement second terminal émetteur.

Selon un second mode de réalisation, la détermination du schéma de modulation et de codage pour la première, respectivement la seconde liaison est effectuée par le premier, respectivement le second terminal récepteur, celui-ci transmettant le schéma ainsi déterminé au premier, respectivement au second, terminal émetteur.

## BRÈVE DESCRIPTION DES DESSINS

D'autres caractéristiques et avantages de l'invention apparaîtront à la lecture de modes de réalisation préférentiels de l'invention faite en référence aux figures jointes parmi lesquelles :

La Fig. 1 représente de manière schématique deux communications interférentes entre un premier couple d'émetteur-récepteur et un second couple d'émetteur-récepteur;

La Fig. 2 donne l'efficacité spectrale en fonction du rapport signal sur bruit plus interférence sur une liaison, pour différents schémas de modulation ;

La Fig. 3 représente un diagramme d'interférence entre les deux communications de la Fig. 1 mettant en évidence deux régimes distincts ;

Les Figs. 4A à 4C représentent l'évolution de la partition du diagramme d'interférence pour différents schémas de modulation et de codage utilisés pour les première et seconde communications ;

La Fig. 5 représente une partition de diagramme d'interférence pour les première et seconde communications ;

La Fig. 6 représente schématiquement une méthode d'adaptation de liaison selon un premier mode de réalisation de l'invention, de type centralisé ;

La Fig. 7 représente schématiquement une méthode d'adaptation de liaison selon une variante du premier mode de réalisation ;

La Fig. 8 représente schématiquement une méthode d'adaptation de liaison selon un second mode de réalisation de l'invention, de type distribué.

## EXPOSÉ DÉTAILLÉ DE MODES DE RÉALISATION PARTICULIERS

Nous considérerons ici un système de communication sans fil comprenant une pluralité de couples de terminaux émetteur et de terminaux récepteur et supposerons qu'une communication entre les terminaux d'un couple peut interférer avec une communication entre les terminaux d'un autre couple, par exemple par ce que ces deux communications utilisent des ressources de transmission communes (interférence intra-bande).

Le système de communication sans fil peut être par exemple un réseau de communication cellulaire, un réseau de communication *ad hoc,* un réseau hétérogène comprenant un niveau macro-cellulaire et un niveau femto-cellulaire.

Dans un réseau hétérogène, les communications considérées peuvent être à deux niveaux différents, par exemple l'une au niveau macro-cellulaire et l'autre au niveau femto-cellulaire.

Chacune des communications peut être soit montante (*uplink*) soit descendante (*downlink*), l'expression de terminal émetteur ou de terminal récepteur étant prise dans son acception large et incluant notamment une station de base ou un point d'accès du réseau.

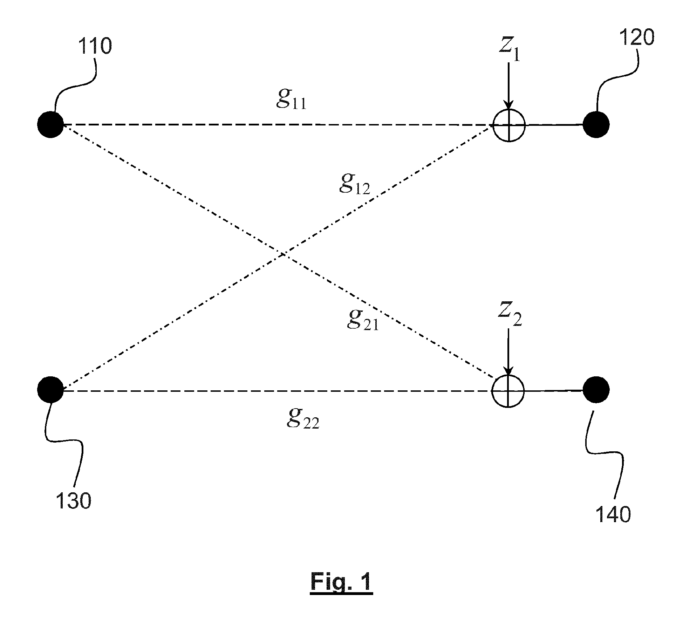

Dans un but de simplification de la présentation, nous nous placerons tout d'abord dans le cas d'un système ne comportant que deux couples de terminaux, comme illustré en Fig. 1.

Si l'on note $x_1$, $x_2$ les signaux respectivement transmis par les terminaux émetteurs 110 et 130 et $y_1$, $y_2$ les signaux respectivement reçus par les terminaux récepteurs 120 et 140, on a :

$$y_1 = g_{11}x_1 + g_{12}x_2 + z_1$$
$$y_2 = g_{21}x_1 + g_{22}x_2 + z_2 \tag{1}$$

où $z_1, z_2$ sont des échantillons de bruit blanc gaussien, $g_{11}, g_{21}$ sont les coefficients de canal entre le terminal émetteur 110 et les terminaux récepteurs 120 et 140, respectivement et $g_{22}, g_{12}$ sont les coefficients de canal entre le terminal émetteur 130 et les terminaux récepteurs 140 et 120, respectivement.

On comprendra que l'interférence entre communications est représentée en (1) par les termes croisés.

Pour la première communication, entre les premiers émetteur et récepteur, les puissances respectives du signal d'information et de l'interférence due à la seconde communication sont respectivement $|g_{11}|^2 P_1$ et $|g_{12}|^2 P_2$.

De manière similaire, pour la seconde communication entre les seconds émetteur et récepteur, les puissances respectives du signal d'information et de l'interférence due à la première communication sont respectivement $|g_{22}|^2 P_2$ et $|g_{21}|^2 P_1$.

Le rapport signal à bruit (SNR) au niveau du premier récepteur peut s'exprimer sous la forme :

$$\gamma_1 = |g_{11}|^2 \frac{P_1}{N_0} \tag{2}$$

De manière similaire, le rapport interférence à bruit au niveau du premier terminal récepteur n'est autre que :

$$\delta_1 = |g_{12}|^2 \frac{P_2}{N_0} \tag{3}$$

De la même façon, les rapports signal à bruit et interférence à bruit au niveau du second terminal récepteur peuvent s'écrire respectivement comme :

$$\gamma_2 = |g_{22}|^2 \frac{P_2}{N_0} \tag{4}$$

$$\delta_2 = |g_{21}|^2 \frac{P_1}{N_0} \tag{5}$$

On remarquera que les relations suivantes sont vérifiées :

$$\delta_1 = f_2 \gamma_2 \qquad \text{et} \qquad \delta_2 = f_1 \gamma_1 \tag{6}$$

où

$$f_1 = \frac{\left|g_{21}\right|^2}{\left|g_{11}\right|^2} \text{ et } f_2 = \frac{\left|g_{12}\right|^2}{\left|g_{22}\right|^2}.$$

On note dans la suite $\rho_1$ et $\rho_2$ les débits respectifs sur la première et la seconde communications.

Les débits $\rho_1$ et $\rho_2$ sur la première communication et la seconde communications s'expriment comme :

$$\rho_1 = \nu_1 B \qquad \text{et} \qquad \rho_2 = \nu_2 B \qquad\qquad (7)$$

où $\nu_1$ et $\nu_2$ sont respectivement, l'efficacité spectrale de la première liaison et l'efficacité spectrale de la seconde liaison, exprimées en bits/s/Hz pour la première communication, et où $B$ est la largeur de bande de la ressource de transmission commune.

L'efficacité spectrale $\nu$ d'une liaison dépend du schéma de codage et de modulation ou MCS (*Modulation and Coding Scheme*) utilisée sur cette liaison. De manière générale, l'efficacité spectrale est proportionnelle au taux de codage (*coding rate*) et à l'ordre de modulation choisis pour la transmission sur la liaison en question.

On sait que pour un rapport signal sur bruit plus interférence (SINR) donné sur une liaison, il est possible d'obtenir une bonne qualité de service (QoS), par exemple en termes de taux d'erreur binaire (BER) ou de taux d'erreur paquet (PER), en utilisant un schéma MCS à faible efficacité spectrale et donc un faible taux de codage, ou bien un moindre qualité de service, en utilisant un schéma MCS à efficacité spectrale élevée et donc un plus fort débit. De manière générale, le choix du schéma MCS est un compromis entre efficacité spectrale et robustesse de la liaison.

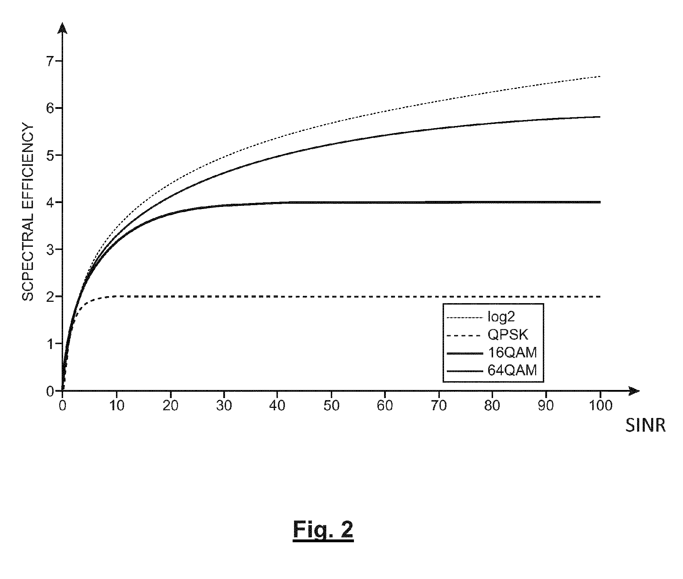

La Fig. 2 représente le gain d'efficacité spectrale par rapport à une modulation binaire (BPSK) en fonction du rapport signal sur bruit plus interférence, ce pour différents schémas de modulation (QPSK, 16-QAM et 64-QAM). On remarque que pour un niveau de SINR donné, l'efficacité spectrale que l'on peut atteindre dépend de l'ordre de la modulation.

L'idée à la base de l'invention est de ne pas combattre l'interférence en modifiant l'allocation de puissance des différents émetteurs, avec les problèmes d'instabilité évoqués plus haut, mais au contraire d'en tirer parti en distinguant deux régimes d'interférence: un premier régime, dit régime faible, dans lequel l'interférence est suffisamment faible pour être traitée comme un bruit thermique et un second régime, dit régime fort, dans lequel l'interférence est suffisamment forte pour pouvoir être décodée et éliminée du signal reçu.

Cette partition du diagramme d'interférence en deux régimes doit être distinguée de la partition en cinq régimes introduite par l'article de R.H Etkin et al. Intitulé « Gaussian interférence channel capacity to within one bit », publié dans IEEE Trans. on Information Theory, Vol. 54, No. 12, Dec. 2008, pp. 5534-55-62 et de la partition en trois régimes proposée dans la demande et FR-A-2 963 193. Dans le cas présent, seuls les deux régimes extrêmes sont pris en compte.

Plus précisément, le régime fort est ici caractérisé par le fait que l'interférence est suffisamment forte pour décoder d'abord le signal d'information relatif à la seconde communication, estimer la contribution due à cette communication dans le signal reçu et la soustraire de ce dernier. Le signal d'information de la première communication est ensuite décodé du signal résultant, débarrassé de l'interférence. On comprendra que le traitement de l'interférence mis en oeuvre dans ce régime est un traitement SIC (*Serial Interference Cancellation*).

Pour que le premier récepteur puisse décoder le signal d'information relatif à la seconde communication, cela suppose que le canal croisé ne soit pas en situation de coupure, autrement dit que sa capacité puisse supporter le débit $\rho_1$ :

$$\nu_2 \le \log_2\left(1 + SNR_{12}\right) = \log_2\left(1 + \frac{\delta_1}{1 + \gamma_1}\right) \qquad\qquad (8)$$

où $SINR_{12}$ est le rapport « signal sur bruit » au niveau du terminal récepteur 120 dans lequel on entend ici le signal comme le signal d'information de la seconde communication.

On déduit de (8) que le régime fort est défini par:

$$f_2 \gamma_2 \ge A_2\left(1 + \gamma_1\right) \qquad\qquad (9)$$

avec $A_2 = 2^{\nu_2} - 1$. A défaut, si l'inégalité (9) n'est pas vérifiée, le système se trouve dans le régime faible.

Les contraintes pour établir une première communication sont différentes selon que le régime d'interférence est faible ou fort :

Dans le régime faible d'interférence, il est nécessaire que le rapport signal sur bruit plus interférence sur le canal direct (entre le premier émetteur 110 et le premier récepteur 120) permette de passer le débit $\rho_1$ de la première communication, autrement dit que :

$$v_1 \leq \log_2\left(1 + SNR_{11}\right) = \log_2\left(1 + \frac{\gamma_1}{1 + \delta_1}\right) \qquad (10)$$

où $SINR_{11}$ est le rapport signal à bruit plus interférence au niveau du premier terminal récepteur.

On déduit de (10) une première contrainte sur $\gamma_1$, relative à la première communication dans le régime faible, à savoir:

$$\gamma_1 \geq A_1\left(1 + f_2\gamma_2\right) \qquad (11)$$

avec $A_1 = 2^{v_1} - 1$.

Dans le régime fort, une fois l'interférence due à la seconde communication soustraite du signal reçu, on se retrouve dans le cas d'un signal simplement bruité par un bruit thermique, autrement dit il est nécessaire que :

$$v_1 \leq \log_2\left(1 + SNR_{11}\right) = \log_2\left(1 + \gamma_1\right) \qquad (12)$$

où $SNR_{11}$ est le rapport signal sur bruit après élimination de l'interférence due à la seconde communication.

On déduit de (12) une seconde contrainte sur $\gamma_1$, relative à la première communication dans le régime fort, à savoir :

$$\gamma_1 \geq A_1 \qquad (13)$$

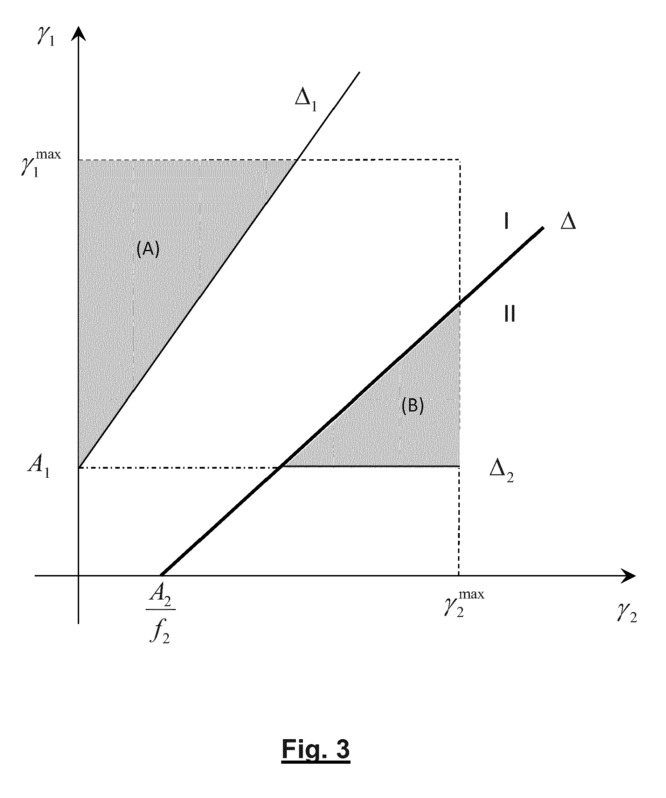

La Fig. 3 représente le diagramme d'interférence entre les deux communications de la Fig. 1.

Les puissances maximales des premier et second émetteurs ont été respectivement notées $\gamma_1^{\max}$ et $\gamma_2^{\max}$.

La frontière délimitant les régimes d'interférence fort et faible est donnée par la droite $\Delta$ (représentée en trait épais), d'équation $\gamma_1 = \frac{f_2}{A_2}\gamma_2 - 1$. En effet, dès lors que le point de fonctionnement $\left(\gamma_2^*, \gamma_1^*\right)$ est situé en dessous de cette droite (régime II), le canal croisé n'est pas en situation de coupure et l'interférence peut être exploitée, autrement dit le signal de la seconde communication peut être décodé et sa contribution au signal reçue par le premier récepteur, supprimée. En revanche, lorsque le canal croisé est en situation de coupure, il n'est plus possible d'effectuer préalablement un décodage de l'interférence et celle-ci est alors traitée comme bruit thermique (régime I).

La droite $\Delta_1$, d'équation $\gamma_1 = A_1(1 + f_2\gamma_2)$, et la droite $\Delta_2$, d'équation $\gamma_1 = A_1$, délimitent la situation de coupure du canal direct, respectivement dans les régimes faible et fort. Il en résulte que dans le régime faible, seule la zone (A) située au dessus de la droite $\Delta_1$ sera exploitable, et dans le régime fort, seule la zone située (B) au dessus de la droite $\Delta_2$ sera exploitable. En d'autres termes, si le point de fonctionnement $\left(\gamma_2^*, \gamma_1^*\right)$ se trouve en dehors des zones (A) et (B), un décodage du signal d'information de la première communication ne sera pas possible.

Lorsque l'efficacité spectrale $v_2$ de la seconde liaison varie, la pente $\frac{f_2}{A_2}$ et l'abscisse à l'origine de la droite $\Delta_2$ varient. Il en résulte que la modification du schéma MCS de la seconde liaison modifie la partition du diagramme entre deux régimes d'interférence.

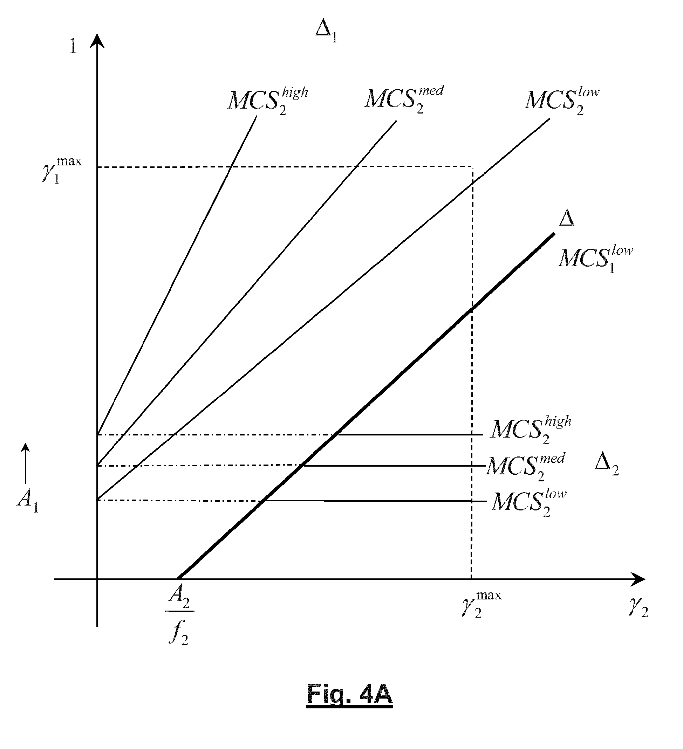

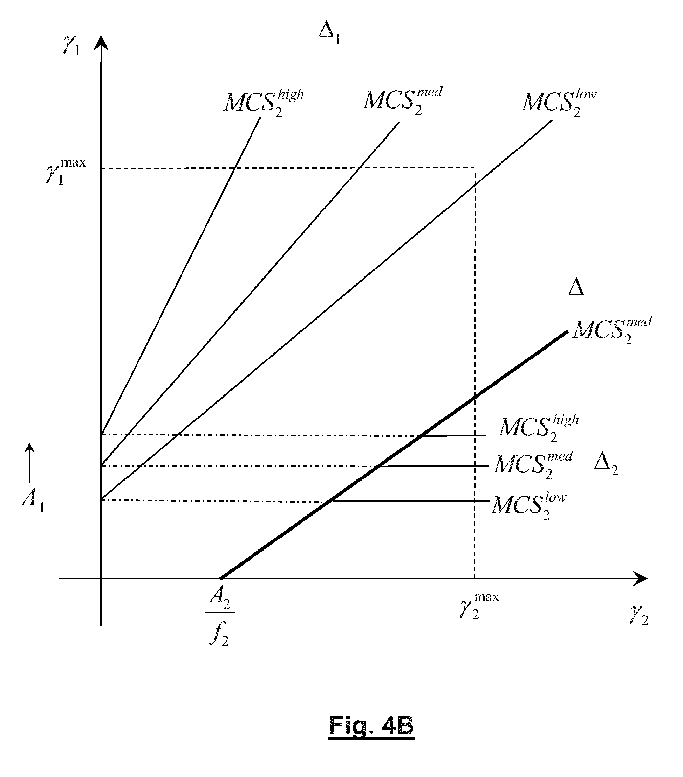

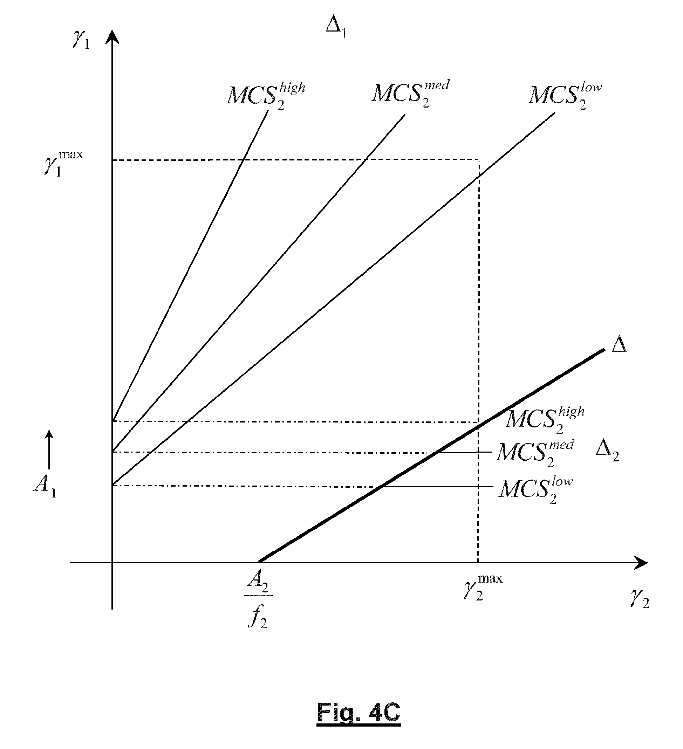

Les Figs. 4A à 4C illustrent l'évolution de cette partition pour différents schémas MCS de la seconde liaison, notés $MCS_2^{low}$, $MCS_2^{med}$ et $MCS_2^{high}$, présentant respectivement des efficacités spectrales faible, moyenne et haute.

On remarque que plus l'efficacité spectrale de la seconde liaison, $\nu_2$, est élevée, plus la zone II, est décalée vers les plus fortes valeurs de rapport signal à bruit $\gamma_2$.

En outre, lorsque l'efficacité spectrale $\nu_1$ de la première liaison varie, la pente $A_1 f_2$ et l'ordonnée à l'origine $A_1$ de la droite $\Delta_1$ varient, de même que varie l'ordonnée à l'origine de la droite $\Delta_2$.

Pour chacune des Figs. 4A à 4C, on a représenté les droites $\Delta_1, \Delta_2$ pour différents schémas MCS de la première liaison, notés $MCS_1^{low}$, $MCS_1^{med}$ et $MCS_1^{high}$, présentant respectivement des efficacités spectrales faible, moyenne et haute.

On comprend que, plus l'efficacité spectrale, $\nu_1$' de la première liaison est élevée, plus les zones de fonctionnement (A) et (B) sont décalées vers les plus fortes valeurs de rapport signal à bruit $\gamma_1$.

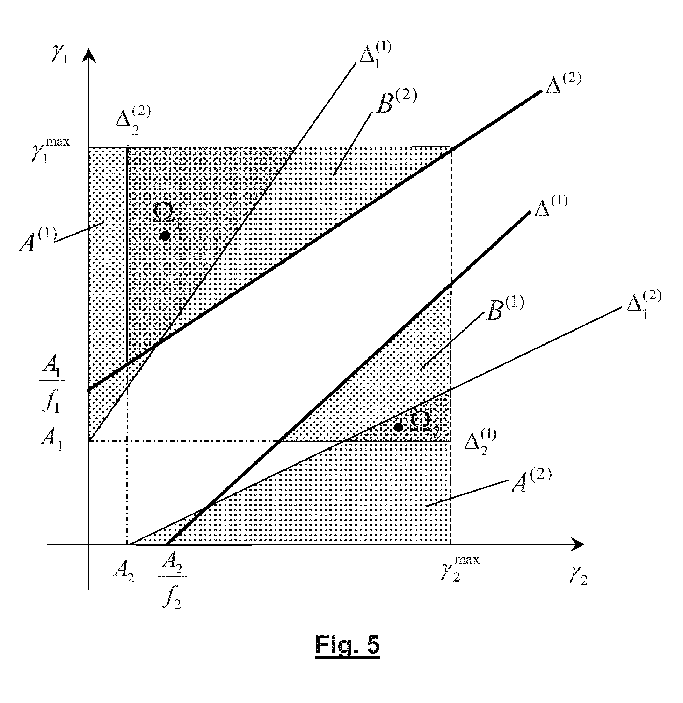

La Fig. 5 représente un diagramme d'interférence dans lequel on a représenté à la fois les régimes d'interférence pour la première communication et les régimes d'interférence pour la seconde communication.

Les zones de fonctionnement relatives à la première communication ont été notées $A^{(1)}$ et $B^{(1)}$ respectivement pour les régimes faible et fort et, de même, celles relatives à la seconde communication ont été notées $A^{(2)}$ et $B^{(2)}$ respectivement pour les régimes faible et fort.

Dans la plupart des cas, pour un couple de puissances $P_1^*$, $P_2^*$ données et donc un couple de valeurs de rapport signal à bruit $\gamma_1^*$ et $\gamma_2^*$ données, il est possible de choisir des schémas MCS$_1$ (pour la première liaison) et MCS$_2$ (pour la seconde liaison), tels que le point de fonctionnement $\Omega$ de coordonnées $\left(\gamma_2^*, \gamma_1^*\right)$ soit situé dans l'intersection $A^{(1)} \cap B^{(2)}$ ou $A^{(2)} \cap B^{(1)}$, comme représenté respectivement par les points $\Omega_1$ et $\Omega_2$. Le point $\Omega_1$ correspond à un traitement d'interférence comme simple bruit thermique pour la première communication et par SIC pour la seconde communication. A l'inverse, le point $\Omega_2$ correspond à un traitement d'interférence comme simple bruit thermique pour la seconde communication et par SIC pour la première communication.

Dans certains cas, notamment lorsque $f_1 f_2 > A_1 A_2$, il sera possible de choisir des schémas MCS$_1$ et MCS$_2$, tels que le point de fonctionnement $\Omega$ soit situé dans l'intersection $B^{(1)} \cap B^{(2)}$. Cela correspond à la situation particulière où les canaux croisés sont sensiblement de meilleure qualité que les canaux directs.

Enfin, le cas où l'interférence entre les deux communications est faible se traduit par des droites de partition $\Delta^{(1)}$ et $\Delta^{(2)}$ en dehors du rectangle de puissance $\left[0, \gamma_2^{max}\right] \times \left[0, \gamma_1^{max}\right]$, autrement dit des zones $B^{(1)}$ et $B^{(2)}$ réduites à l'ensemble vide. Le point de fonctionnement appartient à la zone $A^{(1)} \cap A^{(2)}$ et le traitement de l'interférence est celui d'un bruit thermique pour les deux communications.

La méthode d'adaptation de liaison décrite ci-après s'applique à un système de télécommunication sans fil comprenant une pluralité de couples de terminaux émetteur et récepteur. De manière préalable, on détermine pour chaque première communication entre un premier terminal émetteur et un premier terminal récepteur, la seconde communication générant la plus forte interférence avec la première communication, l'interférence due aux autres communications étant alors assimilée à du bruit thermique.

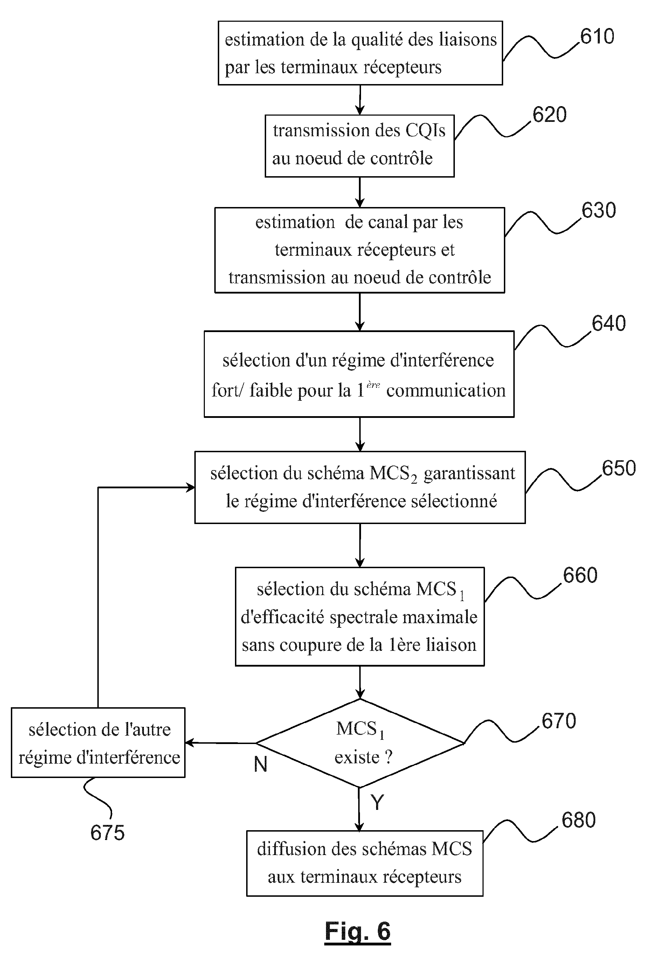

La Fig. 6 représente de manière schématique une méthode d'adaptation de liaison selon un premier mode de réalisation de l'invention. Dans ce premier mode, l'adaptation de liaison est effectuée de manière centralisée dans un noeud de contrôle, qui peut être un noeud du réseau (terminal d'utilisateur, station de base, noeud *ad hoc*).

Dans la première étape, 610, pour chaque liaison entre un terminal émetteur et un terminal récepteur, celui-ci estime la qualité de ladite liaison. Différentes métriques peuvent être utilisées à cet effet. Par exemple, la qualité de liaison peut être estimée en termes de rapport sur bruit plus interférence (SINR) ou bien à l'aide d'une métrique exponentielle de SINR efficace, dite exp-ESM, plus adaptée aux canaux non-ergodiques, telle que décrite dans l'article de K. Brueninghaus intitulé « Link performance models for system level simulation of broadband radio access systems » publié dans Proc. of IEEE 16th Int'l Symposium on PIRMC, 2005, pp. 2306-2311. Le rapport SINR ou exp-ESM peut être mesuré de manière connue en soi au moyen d'une séquence pilote transmise par le terminal émetteur sur ladite liaison.

A l'étape 620, chaque terminal récepteur transmet au noeud de contrôle un indicateur de la qualité de la liaison estimée à l'étape précédente. Cet indicateur ou CQI (*Channel Quality Indicator)* est généralement obtenu à l'aide d'une table de correspondance associant chaque niveau de SINR (en dB) à un indice de CQI avec un pas donné (de l'ordre de 2 dB). A chaque indice de CQI est associé en outre un schéma MCS (et donc une efficacité spectrale donnée). Plus l'indice de CQI est élevé, meilleure est la liaison et donc plus l'ordre de la modulation du schéma MCS peut être élevé (d'où une efficacité spectrale plus élevée).

En pratique, un indice de CQI est transmis pour chaque ressource de communication (par exemple *« chunk »* d'un multiplex OFDM). Différents formats peuvent être envisagés pour transmettre au noeud de contrôle les indices de CQI de manière condensée. On pourra notamment utiliser le format dit Top-M tel que décrit dans l'article de Kolehmainen et al. intitulé « Channel quality indication reporting schemes for UTRAN Long Term Evolution Downlink », publié dans IEEE ITC Spring 2008, pp. 2522-2526.

L'indice de CQI peut être transmis avec une périodicité prédéterminée pour prendre en compte l'évolution de la qualité des liaisons dans le temps.

A l'étape 630, chaque terminal récepteur effectue une estimation de canal pour estimer les coefficients du canal direct et du canal croisé. Plus précisément, lorsqu'une première communication est interférée par une seconde communication, le premier récepteur détermine les coefficients de canal $g_{11}$ et $g_{12}$ et le second récepteur détermine les coefficients de canal $g_{22}$ et $g_{21}$. Ces coefficients de canal sont transmis au noeud de contrôle.

A l'étape 640, le noeud de contrôle dispose de l'ensemble des indices de CQI des différentes liaisons, autrement dit d'une cartographie de la qualité des liaisons du système.

Pour chaque communication, dite première communication, entre un premier terminal émetteur et un premier terminal récepteur, interférée par une seconde communication entre un second terminal émetteur et un second terminal récepteur, le noeud de contrôle sélectionne un régime d'interférence parmi deux régimes possibles : un régime faible dans lequel l'interférence est traitée comme bruit thermique et un régime fort où le signal d'information de la seconde communication est décodé avant de soustraire sa contribution au signal reçu par le premier terminal récepteur.

La sélection de ce régime d'interférence peut être réalisée en fonction de différents critères.

Par exemple, le régime faible pourra être choisi lorsque le premier récepteur dispose de ressources de calcul limitées (UE, c'est-à-dire terminal d'utilisateur) ou que sa batterie présente une charge inférieure à un seuil ou encore lorsque le rapport SINR est supérieur à un premier seuil prédéterminé.

En revanche, le régime fort pourra être choisi lorsque le premier récepteur dispose de ressources de calcul importantes (station de base, point d'accès), sa batterie présente une charge supérieure à un seuil ou que la puissance de l'interférence $\delta_1 = f_2\gamma_2$ est supérieure à un second seuil prédéterminé. Les seuils relatifs à la charge et à la puissance d'interférence dans le régime fort peuvent être distincts de ceux relatifs au régime faible, de manière à garantir une hystérésis de transition entre les deux régimes d'interférence.

D'autres critères pourront être retenus sans sortir du cadre de la présente invention.

A l'étape 650, on choisit, à partir de l'indice de CQI de la seconde liaison, un schéma $MCS_2$ de la seconde communication (c'est-à-dire la droite de partition $\Delta$ en Fig. 3) compatible avec le régime d'interférence sélectionnée à l'étape précédente. Autrement dit, le schéma $MCS_2$ est choisi de manière à ce que le point de fonctionnement $\Omega$ soit situé au dessus de la droite de partition, si le régime faible a été sélectionné et au dessous de cette droite, si le régime fort a été sélectionné. Le schéma $MCS_2$ ainsi choisi doit également correspondre à un indice de CQI inférieur ou égal à l'indice de CQI de la seconde liaison, de manière à ce que celle-ci ne soit pas en situation de coupure.

On notera qu'à un schéma $MCS_2$ donné est associé une efficacité spectrale $\nu_2$ et donc un débit $\rho_2 = \nu_2 B$ déterminant la valeur de la variable $A_2$. Par ailleurs, le coefficient $f_2$ est calculé à partir des coefficients $g_{12}$ et $g_{22}$ et l'on peut donc déterminer la droite de partition pour chaque schéma $MCS_2$.

Toutes choses étant égales par ailleurs, on comprend que plus le schéma $MCS_2$ est robuste, c'est-à-dire plus son efficacité spectrale est faible, plus l'abscisse à l'origine de la droite de partition est proche de 0 et plus sa pente élevée. On privilégie alors le régime fort.

A l'inverse, plus l'efficacité spectrale du schéma $MCS_2$ est élevée et plus l'abscisse de la droite de partition est élevée et sa pente faible. On privilégie alors le régime faible.

On comprend que le schéma $MCS_2$ ainsi choisi n'est généralement pas celui maximisant l'efficacité spectrale, comme dans l'état de la technique.

A l'étape 660, on détermine le schéma $MCS_1$ maximisant l'efficacité spectrale sur la première liaison, compte tenu du régime d'interférence sélectionné à l'étape précédente.

Si le régime faible a été sélectionné, cela revient à déterminer, dans le diagramme de la Fig. 3, la droite $\Delta_1$ de plus forte pente, telle que le point de fonctionnement $\Omega$ soit situé au dessus de cette droite. En d'autres termes, le schéma $MCS_1$ est déterminé comme celui dont l'efficacité spectrale $\nu_1$ est la plus élevée tout en satisfaisant la contrainte (11).

En revanche, si le régime fort a été sélectionné, cela revient à déterminer dans le diagramme de la Fig. 3, la droite $\Delta_2$ d'ordonnée la plus élevée telle que le point de fonctionnement $\Omega$ soit situé au dessus de cette droite. En d'autres termes, le schéma $MCS_1$ est déterminé comme celui dont l'efficacité spectrale $\nu_1$ est la plus élevée tout en satisfaisant la contrainte (13).

A l'étape 670, si aucun schéma $MCS_1$ n'a été trouvé, respectant la contrainte (11) ou (13), selon le régime d'interférence sélectionné, le noeud de contrôle opte pour l'autre régime d'interférence en 675 et la méthode d'adaptation de liaison se poursuit à l'étape 650.

Dans le cas inverse, le noeud de contrôle notifie les schémas MCS retenus aux terminaux émetteurs concernés en 680.

Dans le mode de réalisation ci-dessus, on effectue d'abord une sélection du régime d'interférence et l'on détermine ensuite les schémas $MCS_1, MCS_2$ maximisant l'efficacité spectrale tout en étant compatibles avec le régime sélectionné. A l'inverse, on peut lister les schémas $MCS_1, MCS_2$ possibles, rechercher parmi eux ceux qui sont compatibles avec le régime d'interférence sélectionné, et retenir enfin le couple de schémas présentant la plus grande efficacité spectrale.

En outre, le mode de réalisation exposé ci-dessus suit une stratégie égoïste dans la mesure où l'adaptation de la seconde liaison a seulement pour but de placer la première liaison dans le régime d'interférence sélectionné.

Dans une variante de ce mode de réalisation, la méthode d'adaptation de liaison suit une stratégie coopérative, c'est-à-dire adapte conjointement, pour chaque couple de communications interférentes, les première et seconde liaisons de manière à placer chacune d'elles dans un régime d'interférence sélectionné.

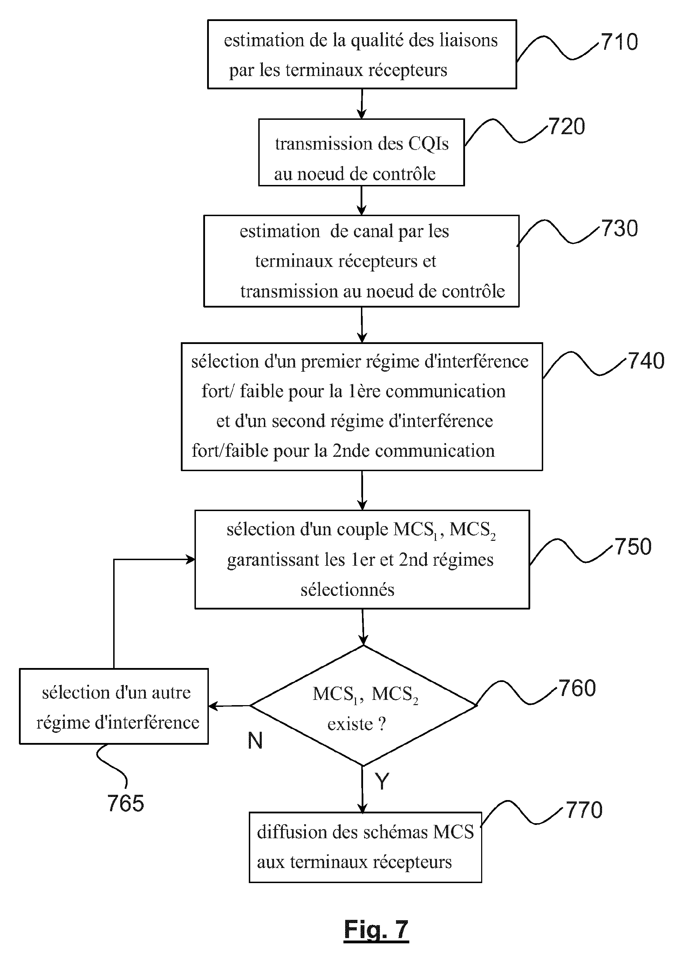

Cette variante à stratégie coopérative est illustrée en Fig. 7.

Les étapes 710 à 730 sont identiques aux étapes 610 à 630 et leur description ne sera donc pas reprise ici.

A l'étape 740, on sélectionne conjointement un régime d'interférence pour la première communication et un régime d'interférence pour la seconde communication. A cette fin, on choisit en 750 un couple $MCS_1$ et $MCS_2$, parmi d'indice inférieur aux indices de CQI des première et seconde liaisons, de sorte que le point de fonctionnement $\Omega$ appartienne à l'intersection des zones relatives aux régimes sélectionnés pour les première et seconde communications. Autrement dit, le schéma $MCS_2$ est choisi de sorte que la droite $\Delta^{(1)}$ est située au dessous ou au dessus du point de fonctionnement, selon que l'on a sélectionné le régime faible ou fort pour la première communication et le schéma $MCS_1$ est choisi de sorte que la droite $\Delta^{(2)}$ est située à gauche ou à droite du point de fonctionnement, selon que l'on a sélectionné le régime faible ou fort pour la seconde communication.

De préférence, on choisit le couple $MCS_1$ et $MCS_2$ vérifiant la condition précédente, tel que les densités spectrales $v_1$ et $v_2$ soient les plus élevées possibles.

Si un tel couple $MCS_1, MCS_2$ existe, 760, le noeud de contrôle notifie en 770 les schémas MCS aux terminaux émetteurs concernés. A défaut, on opte en 765 pour un autre régime d'interférence pour l'une ou l'autre des communications et l'on retourne à l'étape 750.

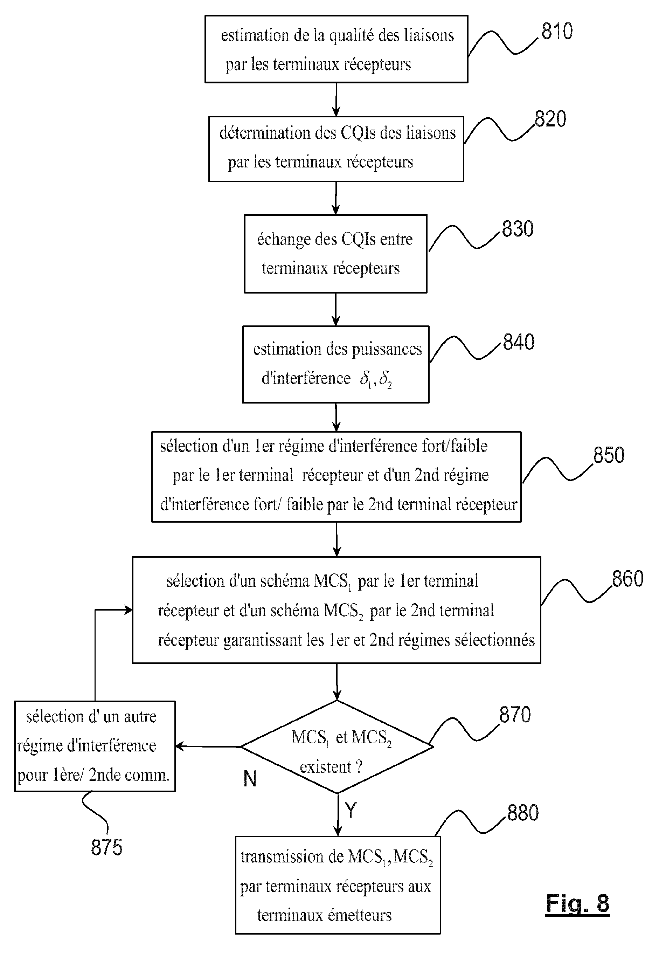

La Fig. 8 représente schématiquement une méthode d'adaptation de liaison selon un second mode de réalisation de l'invention. Dans ce second mode, l'adaptation de liaison est effectuée de manière distribuée au sein des terminaux récepteurs.

La méthode d'adaptation opère encore sur des couples de communications interférentes. On considère dans la suite une première communication entre un premier terminal émetteur et un premier terminal récepteur interférant avec une seconde communication entre un second terminal émetteur et un second terminal récepteur.

A l'étape 810, les premier et second terminaux récepteurs estiment la qualité des première et seconde liaisons. La qualité de liaison peut être estimée à l'aide d'une métrique de SINR ou une métrique exp-ESM, comme indiqué précédemment.

A l'étape 820, chaque terminal récepteur détermine l'indice de CQI associé à la qualité de liaison mesurée à l'étape précédente.

A l'étape 830, les terminaux récepteurs s'échangent les indices de CQI. Ces informations peuvent être transmises à un noeud qui les notifie ensuite à l'ensemble des terminaux concernés.

A l'étape 840, chaque terminal récepteur estime la puissance de l'interférence due à l'autre communication. Ainsi, le premier terminal récepteur estime la puissance $\delta_1 = f_2\gamma_2$ et le second terminal récepteur estime la puissance $\delta_2 = f_1\gamma_1$. Ces puissances peuvent être déterminées par différence (entre ce qui est perçu par le récepteur en présence et en absence de signal) en prévoyant des périodes de silence dans les transmissions des premier et second terminaux émetteurs.

A l'étape 850, chaque terminal récepteur détermine le régime d'interférence dans lequel il souhaite fonctionner. Le régime d'interférence peut être choisi selon différents critères, par exemple charge de la batterie, ressources de calcul du terminal, puissance de l'interférence $\delta_1$ resp. $\delta_2$ supérieure à un certain seuil, statistiques de puissance de l'interférence prise sur un intervalle de temps plus ou moins long.

A l'étape 860, le premier terminal récepteur détermine un schéma $MCS_2$, d'indice supérieur à l'indice de CQI de la seconde liaison, permettant à la première communication d'opérer dans le régime d'interférence sélectionné, autrement dit un schéma d'efficacité spectrale $v_2$ vérifiant $A_2 \geq \dfrac{\delta_1\gamma_1}{1+\gamma_1}$ si le régime faible a été sélectionné et tel que

$$A_2 < \frac{\delta_1\gamma_1}{1+\gamma_1}$$ si le régime fort a été sélectionné. De manière similaire, le second terminal récepteur détermine un schéma

$MCS_1$, d'indice supérieur à l'indice CQI de la première liaison, permettant à la seconde communication d'opérer dans régime d'interférence sélectionné, autrement dit un schéma d'efficacité spectrale $\nu_1$, vérifiant $A_1 \geq \dfrac{\delta_2 \gamma_2}{1+\gamma_2}$ si le régime faible a été sélectionné et tel que $A_1 < \dfrac{\delta_2 \gamma_2}{1+\gamma_2}$ si le régime fort a été sélectionné.

De préférence, on choisit le couple $MCS_1$ et $MCS_2$ vérifiant les conditions précédentes, tel que les efficacités spectrales $\nu_1$ et $\nu_2$ soient les plus élevées possibles.

A l'étape 870, le premier terminal récepteur vérifie qu'un tel schéma $MCS_1$ existe et le second terminal récepteur vérifie qu'un tel schéma $MCS_2$ existe. Si c'est bien le cas on passe à l'étape 880. A défaut on sélectionne un autre régime d'interférence pour l'une ou l'autre communication.

A l'étape 880, chaque terminal récepteur transmet au terminal émetteur correspondant le schéma MCS ainsi déterminé.

## Revendications

**1.** Méthode d'adaptation de liaison pour système de télécommunication sans fil comprenant au moins un premier couple de terminaux constitué d'un premier terminal émetteur et d'un premier terminal récepteur et d'un second couple de terminaux constitué d'un second terminal émetteur et d'un second terminal récepteur, une première communication sur une première liaison entre les terminaux du premier couple utilisant les mêmes ressources de transmission qu'une seconde communication sur une seconde liaison entre les terminaux du second couple, de sorte que les deux communications interfèrent entre elles, **caractérisée en ce que**, pour la première communication :

- on sélectionne un premier régime d'interférence parmi un régime faible, dans lequel le premier terminal récepteur traite l'interférence due à la seconde communication comme un bruit thermique, et un régime fort, dans lequel il décode le signal d'information de la seconde communication pour en soustraire sa contribution au signal reçu ;
- on détermine un schéma de modulation et de codage pour la seconde liaison permettant à la première communication d'opérer dans le régime d'interférence ainsi sélectionné ;
- on détermine un schéma de modulation et de codage pour la première liaison maximisant l'efficacité spectrale sans que cette liaison soit en situation de coupure.

**2.** Méthode d'adaptation de liaison selon la revendication 1, **caractérisée en ce que** le régime d'interférence est sélectionné en fonction d'un niveau de charge de la batterie du premier terminal récepteur, le régime faible étant sélectionné lorsque ce niveau est inférieur à un premier seuil et le régime fort étant sélectionné lorsque ce niveau est supérieur à un second seuil.

**3.** Méthode d'adaptation de liaison selon la revendication 1, **caractérisée en ce que** le régime d'interférence est sélectionné en fonction des ressources de calcul du premier terminal récepteur, le régime faible étant sélectionné lorsque ces ressources sont inférieures à un premier seuil et le régime fort étant sélectionné lorsque ces ressources sont supérieures à un second seuil.

**4.** Méthode d'adaptation de liaison selon la revendication 1, **caractérisée en ce que** le régime d'interférence est sélectionné en fonction de la puissance de l'interférence reçue par le premier terminal récepteur, le régime faible étant sélectionné lorsque cette puissance est inférieure à un premier seuil et le régime fort étant sélectionné lorsque cette puissance est supérieure à un second seuil.

**5.** Méthode d'adaptation de liaison selon la revendication 1, **caractérisée en ce que** l'on sélectionne un second régime d'interférence pour la seconde communication, parmi un régime faible, dans lequel le second terminal récepteur traite l'interférence due à la première communication comme un bruit thermique, et un régime fort, dans lequel il décode le signal d'information de la première communication pour en soustraire sa contribution au signal reçu ;

- on détermine un schéma de modulation et de codage pour la première liaison permettant à la première communication d'opérer dans le régime d'interférence ainsi sélectionné.

**6.** Méthode d'adaptation de liaison selon la revendication 5, **caractérisée en ce que** les schémas de modulation et de codage sont déterminés conjointement pour la première et la seconde liaisons, de manière à ce que la première et la seconde communications opèrent respectivement dans les régimes d'interférence sélectionnés pour la première et la seconde communications, lesdits schémas de modulation étant en outre sélectionnés pour présenter une efficacité spectrale maximale sans que les première et seconde liaisons soient en situation de coupure.

**7.** Méthode d'adaptation de liaison selon les revendications précédentes, **caractérisée en ce que** l'on mesure la qualité de chaque liaison à l'aide d'un rapport signal sur bruit plus interférence ou bien d'une métrique exponentielle de SINR efficace, et que l'on en déduit un indice de qualité de ladite liaison.

**8.** Méthode d'adaptation de liaison selon la revendication 7, **caractérisée en ce que** pour garantir qu'une liaison n'est pas en situation de coupure, le schéma de modulation et de codage est choisi inférieur à l'indice de qualité de la liaison.

**9.** Méthode d'adaptation de liaison selon l'une des revendications précédentes, **caractérisée en ce que** la détermination du schéma de modulation et de codage pour la première, respectivement la seconde liaison, est effectuée de manière centralisée par un noeud de contrôle, ledit noeud de contrôle notifiant le schéma ainsi déterminé au premier, respectivement second terminal émetteur.

**10.** Méthode d'adaptation de liaison selon l'une des revendications 1 à 8, **caractérisée en ce que** la détermination du schéma de modulation et de codage pour la première, respectivement la seconde liaison est effectuée par le premier, respectivement le second terminal récepteur, et que celui-ci transmet le schéma ainsi déterminé au premier, respectivement au second, terminal émetteur.

**Patentansprüche**

**1.** Verfahren zur Verbindungsanpassung für ein drahtloses Telekommunikationssystem, umfassend wenigstens ein erstes Paar von Terminals, gebildet durch ein erstes Sendeterminal und ein erstes Empfangsterminal, und ein zweites Paar von Terminals, gebildet durch ein zweites Sendeterminal und ein zweites Empfangsterminal, wobei eine erste Kommunikation auf einer ersten Verbindung zwischen den Terminals des ersten Paars die gleichen Übertragungsressourcen verwendet wie eine zweite Kommunikation auf einer zweiten Verbindung zwischen den Terminals des zweiten Paars, derart, dass die zwei Kommunikationen miteinander interferieren, **dadurch gekennzeichnet, dass** man für die erste Kommunikation:

- ein erstes Interferenzregime auswählt aus einem schwachen Regime, in dem das erste Empfangsterminal die Interferenz auf Grund der zweiten Kommunikation als ein thermisches Rauschen behandelt, und einem starken Regime, in dem es das Informationssignal der zweiten Kommunikation dekodiert, um hiervon seinen Beitrag zum empfangenen Signal zu subtrahieren;
- ein Modulations- und Kodierschema für die zweite Verbindung bestimmt, das es der ersten Kommunikation erlaubt, in dem derart ausgewählten Interferenzregime zu arbeiten;
- ein Modulations- und Kodierschema für die erste Verbindung bestimmt, die die spektrale Effizienz maximiert, ohne dass sich diese Verbindung in einer Unterbrechungssituation befindet.

**2.** Verfahren zur Verbindungsanpassung nach Anspruch 1, **dadurch gekennzeichnet, dass** das Interferenzregime als Funktion eines Ladungsniveaus der Batterie des ersten Empfangsterminals ausgewählt wird, wobei das schwache Regime ausgewählt wird, wenn dieses Niveau kleiner als eine erste Schwelle ist, und das starke Regime ausgewählt wird, wenn dieses Niveau größer als eine zweite Schwelle ist.

**3.** Verfahren zur Verbindungsanpassung nach Anspruch 1, **dadurch gekennzeichnet, dass** das Interferenzregime als Funktion der Rechenressourcen des ersten Empfangsterminals ausgewählt wird, wobei das schwache Regime ausgewählt wird, wenn diese Ressourcen kleiner als eine erste Schwelle sind, und das starke Regime ausgewählt wird, wenn diese Ressourcen größer als eine zweite Schwelle sind.

**4.** Verfahren zur Verbindungsanpassung nach Anspruch 1, **dadurch gekennzeichnet, dass** das Interferenzregime als Funktion der vom ersten Empfangsterminal empfangenen Interferenzleistung ausgewählt wird, wobei das schwache Regime ausgewählt wird, wenn diese Leistung kleiner als eine erste Schwelle ist, und das starke Regime ausgewählt wird, wenn diese Leistung größer als eine zweite Schwelle ist.

**5.** Verfahren zur Verbindungsanpassung nach Anspruch 1, **dadurch gekennzeichnet, dass** man ein zweites Interferenzregime für die zweite Kommunikation auswählt aus einem schwachen Regime, in dem das zweite Empfangsterminal die Interferenz auf Grund der ersten Kommunikation als ein thermisches Rauschen behandelt, und einem starken Regime, in dem es das Informationssignal der ersten Kommunikation dekodiert, um hiervon seinen Beitrag zum empfangenen Signal zu subtrahieren;

- man ein Modulations- und Kodierschema für die erste Verbindung bestimmt, das es der ersten Kommunikation erlaubt, in dem derart ausgewählten Interferenzregime zu arbeiten.

**6.** Verfahren zur Verbindungsanpassung nach Anspruch 5, **dadurch gekennzeichnet, dass** die Modulations- und Kodierschemata für die erste und die zweite Verbindung gemeinsam bestimmt werden, derart, dass die erste und die zweite Kommunikation in den ausgewählten Interferenzregimes für die erste bzw. die zweite Kommunikation arbeiten, wobei die Modulationsschemata ferner derart ausgewählt werden, dass sie eine maximale spektrale Effizienz aufweisen, ohne dass sich die erste und die zweite Verbindung in einer Unterbrechungssituation befinden.

**7.** Verfahren zur Verbindungsanpassung nach den vorhergehenden Ansprüchen, **dadurch gekennzeichnet, dass** man die Qualität jeder Verbindung mit Hilfe eines Verhältnisses von Signal zu Rauschen plus Interferenz misst oder einer effizienten exponentiellen SINR-Metrik, und dass man hieraus einen Index für die Qualität der Verbindung ableitet.

**8.** Verfahren zur Verbindungsanpassung nach Anspruch 7, **dadurch gekennzeichnet, dass** zur Gewährleistung, dass sich eine Verbindung nicht in einer Unterbrechungssituation befindet, das Modulations- und Kodierschema kleiner als der Qualitätsindex der Verbindung gewählt wird.

**9.** Verfahren zur Verbindungsanpassung nach einem der vorhergehenden Ansprüche, **dadurch gekennzeichnet, dass** die Bestimmung des Modulations- und Kodierschemas für die erste bzw. die zweite Verbindung in zentralisierter Weise durch einen Kontrollknoten erfolgt, wobei der Kontrollknoten das derart bestimmte Schema dem ersten bzw. dem zweiten Sendeterminal mitteilt.

**10.** Verfahren zur Verbindungsanpassung nach einem der Ansprüche 1 bis 8, **dadurch gekennzeichnet, dass** die Bestimmung des Modulations- und Kodierschemas für die erste bzw. die zweite Verbindung durch das erste bzw. das zweite Empfangsterminal erfolgt, und dass dieses das derart bestimmte Schema an das erste bzw. das zweite Sendeterminal überträgt.

**Claims**

**1.** A link adaptation method for a wireless telecommunications system comprising at least one first pair of terminals formed by a first transmitting terminal and a first receiving terminal and a second pair of terminals formed by a second transmitting terminal and a second receiving terminal, a first communication on a first link between the terminals of the first pair using the same transmission resources as a second communication on a second link between the terminals of the second pair, such that the two communications interfere with each other, **characterized in that**, for the first communication:

- a first interference regime is selected for the first communication from among a weak regime, in which the first receiving terminal processes the interference due to the second communication as thermal noise, and a strong regime, in which it decodes the information signal of the second communication to subtract its contribution to the received signal therefrom;
- a modulation and coding scheme is determined for the second link allowing the first communication to operate in the interference regime thus selected;
- a modulation and coding scheme is determined for the first link maximizing the spectral efficiency without that link being in an outage situation.

**2.** The link adaptation method according to claim 1, **characterized in that** the interference regime is selected as a function of a charge level of the battery of the first receiving terminal, the weak regime being selected when that level is below a first threshold and the strong regime being selected when that level is above a second threshold.

**3.** The link adaptation method according to claim 1, **characterized in that** the interference regime is selected as a function of the computation resources of the first receiving terminal, the weak regime being selected when those resources are below a first threshold and the strong regime being selected when those resources are above a second threshold.

4. The link adaptation method according to claim 1, **characterized in that** the interference regime is selected as a function of the power of the interference received by the first receiving terminal, the weak regime being selected when that power is below a first threshold and the strong regime being selected when that power is above a second threshold.

5. The link adaptation method according to claim 1, **characterized in that** a second interference regime is also selected for the second communication, from among a weak regime, in which the second receiving terminal processes the interference due to the first communication as thermal noise, and a strong regime, in which it decodes the information signal of the first communication to subtract its contribution to the received signal therefrom;

   - a modulation and coding scheme is determined for the first link allowing the first communication to operate in the interference regime thus selected.

6. The link adaptation method according to claim 5, **characterized in that** the modulation and encoding regimes may be determined jointly for the first and second links, such that the first and second communications respectively operate in the interference regimes selected for the first and second communications, said modulation regimes further being selected to have a maximal spectral efficiency without the first and second links being in an outage situation.

7. The link adaptation method according to the preceding claims, **characterized in that** the quality of each link is measured using a signal-to-noise and interference ratio or using an effective SINR exponential metric, and a quality index of said link is deduced therefrom.

8. The link adaptation method according to claim 7, **characterized in that** to guarantee that a link is not in an outage situation, the modulation and coding scheme may be chosen to be below the quality index of the link.

9. The link adaptation method according to one of the preceding claims, **characterized in that** the determination of the modulation and coding scheme for the first, second link, respectively, is done in a centralized manner by a control node, said control node indicating the regime thus determined to the first, second transmitting terminal, respectively.

10. The link adaptation method according to one of claims 1 to 8, **characterized in that** the determination of the modulation and encoding regime for the first, second link, respectively, is done by the first, second receiving terminal, respectively, and the latter transmitting the regime thus determined to the first, second transmitting terminal, respectively.

**Fig. 1**

**Fig. 2**

**Fig. 3**

EP 2 763 340 B1

**Fig. 4A**

18

**Fig. 4B**

**Fig. 4C**

**Fig. 5**

estimation de la qualité des liaisons par les terminaux récepteurs — 610

transmission des CQIs au noeud de contrôle — 620

estimation de canal par les terminaux récepteurs et transmission au noeud de contrôle — 630

sélection d'un régime d'interférence fort/ faible pour la $1^{\text{ère}}$ communication — 640

sélection du schéma $MCS_2$ garantissant le régime d'interférence sélectionné — 650

sélection du schéma $MCS_1$ d'efficacité spectrale maximale sans coupure de la 1ère liaison — 660

sélection de l'autre régime d'interférence — 675

$MCS_1$ existe ? — 670

N

Y

diffusion des schémas MCS aux terminaux récepteurs — 680

**Fig. 6**

estimation de la qualité des liaisons
par les terminaux récepteurs — 710

transmission des CQIs
au noeud de contrôle — 720

estimation de canal par les
terminaux récepteurs et
transmission au noeud de contrôle — 730

sélection d'un premier régime d'interférence
fort/ faible pour la 1ère communication
et d'un second régime d'interférence
fort/faible pour la 2nde communication — 740

sélection d'un couple $MCS_1$, $MCS_2$
garantissant les 1er et 2nd régimes
sélectionnés — 750

$MCS_1$, $MCS_2$
existe ? — 760

N

sélection d'un autre
régime d'interférence — 765

Y

diffusion des schémas MCS
aux terminaux récepteurs — 770

**Fig. 7**

estimation de la qualité des liaisons
par les terminaux récepteurs $\quad$ 810

détermination des CQIs des liaisons
par les terminaux récepteurs $\quad$ 820

échange des CQIs entre
terminaux récepteurs $\quad$ 830

estimation des puissances
d'interférence $\delta_1, \delta_2$ $\quad$ 840

sélection d'un 1er régime d'interférence fort/faible
par le 1er terminal récepteur et d'un 2nd régime
d'interférence fort/ faible par le 2nd terminal récepteur $\quad$ 850

sélection d'un schéma $MCS_1$ par le 1er terminal
récepteur et d'un schéma $MCS_2$ par le 2nd terminal
récepteur garantissant les 1er et 2nd régimes sélectionnés $\quad$ 860

sélection d'un autre
régime d'interférence
pour 1ère/ 2nde comm.

$MCS_1$ et $MCS_2$
existent ? $\quad$ 870

N

875

Y

transmission de $MCS_1, MCS_2$
par terminaux récepteurs aux
terminaux émetteurs $\quad$ 880

**Fig. 8**

## RÉFÉRENCES CITÉES DANS LA DESCRIPTION

**Documents brevets cités dans la description**

- FR 2963194 A
- FR 2963195 A
- EP 2549670 A1
- FR 2963193 A

**Littérature non-brevet citée dans la description**

- **CEÌ DRIC ABGRALL et al.** Centralized Power Allocation for Interference Limited Networks. *VEHICULAR TECHNOLOGY CONFERENCE FALL (VTC 2010-FALL), 2010 IEEE 72ND,* 06 Septembre 2010, ISBN 978-1-4244-3573-9, 1-5
- **R.H ETKIN et al.** Gaussian interférence channel capacity to within one bit. *IEEE Trans. on Information Theory,* Décembre 2008, vol. 54 (12), 5534-55, 62
- **K. BRUENINGHAUS.** Link performance models for system level simulation of broadband radio access systems. *Proc. of IEEE 16th Int'l Symposium on PIRMC,* 2005, 2306-2311
- **KOLEHMAINEN et al.** Channel quality indication reporting schemes for UTRAN Long Term Evolution Downlink. *IEEE ITC Spring,* 2008, 2522-2526